# EUROPÄISCHE PATENTSCHRIFT

(11) **EP 0 478 809 B1**
(45) Veröffentlichungstag und Bekanntmachung des Hinweises auf die Patenterteilung: **07.12.1994**
(21) Anmeldenummer: 90118759.1
(22) Anmeldetag: 29.09.1990
(51) Int. Cl.: H02M 7/19, H02M 7/162

(54) **Verfahren und Vorrichtung zur Erzeugung eines 12-phasigen Steuersignalsystems aus einem 6-phasigen Steuersignalsystem**
Method and arrangement for the generation of a 12-phase control signal system from a 6-phase control signal system
Procédé et dispositif de génération d'un système de signaux de commande à 12 phases à partir d'un système de signaux de commande à 6 phases

(43) Veröffentlichungstag der Anmeldung: 08.04.1992
(73) Patentinhaber: SIEMENS AKTIENGESELLSCHAFT, 80333 München (DE)
(72) Erfinder: Ostermeyer, Harald, D-8521 Spardorf (DE)

(56) Entgegenhaltungen:
- EP-A- 0 354 430
- US-A- 4 245 295
- PATENT ABSTRACTS OF JAPAN vol. 9, no. 288 (E-358)(2011) 15 November 1985 ; & JP-A-60 128 870

## Beschreibung

Die Erfindung bezieht sich auf ein Verfahren zur Erzeugung eines 12-phasigen Steuersignalsystems aus einem 6-phasigen Steuersignalsystem und auf eine Schaltungsanordnung zur Durchführung des Verfahrens.

Aus der EP 0 354 430 A2 ist ein Umrichter aus parallelen Teilumrichtern mit Gleichstromkreis bekannt. Als Stromrichtergrundschaltung für jeden Teilumrichter dient jeweils ein 6-pulsiger Umrichter mit Gleichstromzwischenkreis. Die netzseitigen Stromrichter beider Teilstromrichter werden über einen Stromrichtertransformator mit getrennten Sekundärwicklungen aus einem Netz gespeist. Zum Einprägen der Gleichströme in den Gleichstromkreis der Teilumrichter sind jeweils Drosseln vorgesehen. Die beiden Teilumrichter werden zum einen mit zwei um 30° el. zueinander phasenverschobenen Drehspannungssystemen am Eingang versorgt und zum anderen jeweils über einen Steuersatz angesteuert, wobei die beiden Steuersätze um 30° el. zueinander phasenversetzt Zündimpulse generieren.

Durch die Parallelschaltung von identischen Teilumrichtern kann die abgebbare elektrische Leistung erhöht werden. Eine Parallelschaltung von Teilumrichtern kann vorteilhaft dazu verwendet werden, daß bei Betrieb der parallelen Teilumrichter mit unterschiedlichen Schaltungswinkeln aufgrund der separaten Ein- oder Mehrphasensysteme am Ausgang der Umrichter durch die Überlagerung der jeweils davon in der Last hervorgerufenen Drehfelder ein resultierendes Drehfeld mit höherer Pulszahl gebildet wird. Damit die Pulszahl des gesamten Umrichters, d.h. die Parallelschaltung der beiden Teilumrichter, größer ist als die Pulszahl der einzelnen Teilumrichter, müssen die parallelen Teilumrichter untereinander phasenversetzt getaktet werden.

Nachteilig bei einer derartigen Parallelschaltung von Teilumrichtern ist, daß jeder Teilumrichter von einem eigenen Steuersatz bzw. einer eigenen Steuersatzbaugruppe angesteuert wird. Neben diesem vermehrten Hardware-Aufwand fällt vor allem der Nachteil ins Gewicht, daß eine echte 12-Puls-Dynamik, d.h., Abtasten, Rechnen, Regeln und alle 30° el. Winkel verschieben, auf diese Art und Weise nicht realisierbar ist. Mitunter wird bei einer derartigen Parallelschaltung nicht einmal eine 6-Puls-Dynamik erzielt, da für die Kommunikation und Synchronisation der beiden Steuersätze verschiedene Totzeiten in Kauf genommen werden müssen.

Der Erfindung liegt nun die Aufgabe zugrunde, ein Verfahren und eine Schaltungsanordnung zur Erzeugung eines 12-phasigen Steuersignalsystems aus einem 6-phasigen Steuersignalsystem anzugeben, wobei der Aufwand gegenüber der bekannten Anordnung sich erheblich verringert.

Diese Aufgabe wird erfindungsgemäß durch die Merkmale des Anspruchs 1 gelöst.

Ausgehend von einem 6-phasigen Steuersignalsystem, dessen 60° el. phasenverschobene Steuersignale jeweils einen ersten Impuls und eine um 60° el. phasenverschobenen Zweitimpuls aufweisen, werden mittels einer Abänderung des Modulationssignals (Halbierung der Amplitude des Modulationssignals) die Erst- und Zweitimpulse jedes Steuersignals des 6-phasigen Steuersignalsystems dupliziert. Dadurch weist jedes Steuersignal vier Impulse auf, die zueinander jeweils um 30° el. phasenverschoben sind. Um diese Impulse dieses 6-phasigen modifizierten Steuersignalsystems auf ein 12-phasiges Steuersignalsystem zu verteilen, wird ein Umschaltsignal derart generiert, daß frühestens mit Beendigung eines Erstimpulses sein Zustand von "low" nach "high" frühestens mit Beendigung eines duplizierten Erstimpulses sein Zustand von "high" nach "low" ändert. In Abhängigkeit dieses Umschaltsignals werden die Impulse der sechs Steuersignale des 6-phasigen Steuersignalsystems verteilt und neu zusammengestellt, so daß ein 12-phasiges Steuersignalsystem mit zwölf Steuersignalen entsteht. Befindet sich das Umschaltsignal im high-Zustand, können die anstehenden Steuersignale des 6-phasigen modifizierten Steuersignalsystems jeweils an korrespondierenden Ausgängen der beiden Untersysteme des 12-phasigen Steuersignalsystems abgenommen werden. Befindet sich das Umschaltsignal im low-Zustand, so können die anstehenden Steuersignale des 6-phasigen modifizierten Steuersignalsystems einerseits an korrespondierenden Ausgängen des ersten Untersystems des 12-phasigen Steuersignalsystems und andererseits an den Ausgängen des zweiten Untersystems abgenommen werden, deren Platzziffern den Platzziffern des ersten Untersystems entsprechen, wenn sich das Umschaltsignal im high-Zustand befindet. Dies bedeutet, daß das zweite Untersystem dem ersten Untersystem um eine Phase (30° el.) nacheilt. Somit werden die Steuersignale des modifizierten Steuersignalsystems dupliziert und diese dann um 30° el. phasenverschoben, wobei an den Ausgängen des ersten Untersystems die Steuersignale des modifizierten Steuersignalsystems und an den Ausgängen des zweiten Untersystems die um 30° el. phasenverschobenen Steuersignale anstehen.

Somit erzeugt man aus den Impulsen des 6-phasigen Steuersignalsystems ohne großen Aufwand die Impulse für ein 12-phasiges Steuersignalsystem.

Der Aufbau einer erfindungsgemäßen Schaltungsanordnung zur Durchführung des Verfahrens ist dem Anspruch 3 zu entnehmen, wobei von einem bekannten Steuersatz ausgegangen wird. Bei dieser erfindungsgemäßen Schaltungsanordnung werden einerseits die sechs Ausgänge des Steuersatzes mit den Eingängen einer Schnittstellen-Einrichtung verbunden, die zwölf Ausgänge aufweist, und andererseits wird ein Umschaltausgang des Steuersatzes mit einem Steuereingang der Schnittstellen-Einrichtung verknüpft. Im bekannten Steuersatz wird das Modulationssignal verändert und das Umschaltsignal generiert.

Mittels einer Interface-Baugruppe, so wird eine Schnittstellen-Einrichtung auch genannt, und einem modifizierten Steuersatz können Impulse für ein 12-phasiges Steuersignalsystem erzeugt werden. Gegenüber der bekannten Anordnung reduziert sich ein zweiter Steuersatz auf die erfindungsgemäße Interface-Baugruppe.

Den Ansprüchen 4 und 5 sind vorteilhafte Ausgestaltungen der Schnittstellen-Einrichtung bzw. Interface-Baugruppe zu entnehmen.

Den Ansprüchen 6 bis 9 sind Verwendungsmöglichkeiten des erfindungsgemäßen Verfahrens und der Schaltungsanordnung zur Durchführung des Verfahrens zu entnehmen.

Zur weiteren Erläuterung der Erfindung wird auf die Zeichnung Bezug genommen, in der ein Ausführungsbeispiel einer Schaltungsanordnung zur Durchführung des erfindungsgemäßen Verfahrens schematisch veranschaulicht ist. In
- Figur 1: sind in einem Diagramm über dem Phasenwinkel φ Modulationssignale dargestellt, die
- Figuren 2 bis 7: veranschaulichen die Steuersignale S1,...,S6 des 6-phasigen Steuersignalsystems und die Steuersignale SM1,...,SM6 des ersten Untersystems des 12-phasigen Steuersignalsystems, die jweils in einem Diagramm über dem Phasenwinkel φ dargestellt sind, die
- Figur 8: veranschaulicht in einem Diagramm über dem Phasenwinkel φ ein Umschaltsignal Q̅₁₂, in
- Figur 9: ist eine Ausführungsform einer Schaltungsanordnung zur Durchführung des erfindungsgemäßen Verfahrens veranschaulicht, die
- Figuren 10 bis 15: zeigen die Steuersignale SL1,...,SL6 des zweiten Untersystems des 12-phasigen Steuersignalsystems, die jeweils in einem Diagramm über dem Phasenwinkel φ dargestellt sind, die
- Figur 16: zeigt eine Ausführungsform einer Schnittstellen-Einrichtung für eine erste Momentenrichtung, die
- Figur 17: zeigt einen 12-pulsigen, netzgeführten Umkehrstromrichter zur Speisung einer Gleichstrommaschine bzw. eines Zwischenkreises mit nachgeschaltetem Wechselrichter, der eine Asynchronmaschine speist, und die
- Figur 18: zeigt eine Tabelle eines Impulsmusters bei stationärem Betrieb und Vollaussteuerung.

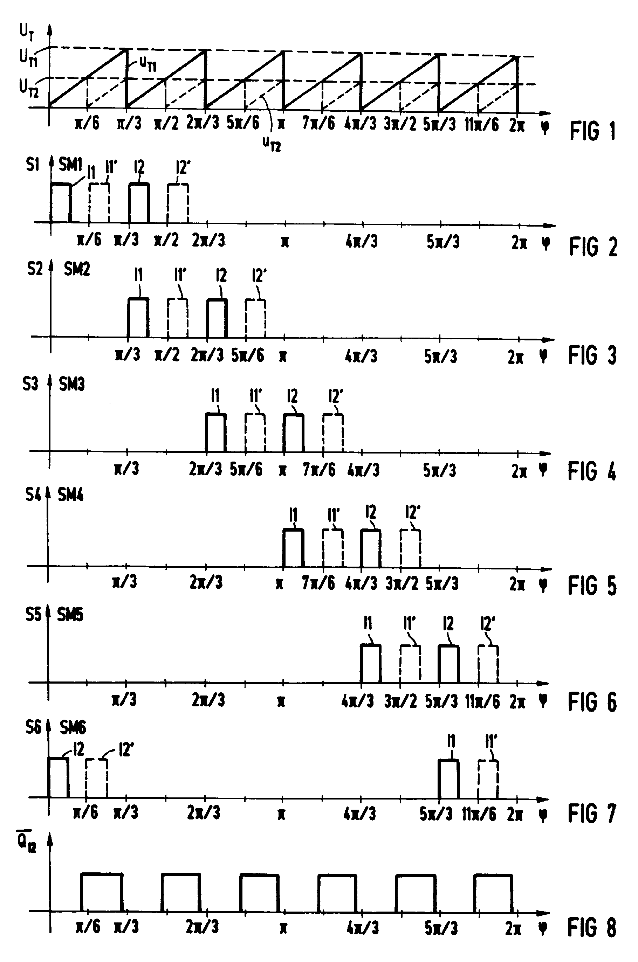

In Figur 1 ist ein Modulationssignal u_{T1} eines bekannten Steuersatzes in einem Diagramm über dem Phasenwinkel φ dargestellt. Aufgrund dieses Modulationssignals u_{T1} entstehen sechs Steuersignale S1,...,S6, die jeweils einen Erstimpuls I1 und einen Zweitimpuls I2 aufweisen. Diese Steuersignale S1,...,S6 sind jeweils in einem Diagramm über dem Phasenwinkel φ in den Figuren 2 bis 7 näher dargestellt. Diesen Figuren 2 bis 7 kann entnommen werden, daß jeweils der Zweitimpuls I2 um 60° el. zum Erstimpuls I1 phasenverschoben ist.

Ausgehend von diesen Steuersignalen S1,...,S6 eines 6-phasigen Steuersignalsystems ST6 wird gemäß dem erfindungsgemäßen Verfahren das Modulationssignal u_{T1} derart abgeändert, daß jeder Erst- und Zweitimpuls I1 und I2 dupliziert werden. Um dies zu erreichen, braucht nur die Amplitude U_{T1} des Modulationssignals u_{T1} halbiert werden. Dadurch erhält man das Modulationssignal u_{T2} mit der Amplitude U_{T2}=1/2 U_{T1}. Die duplizierten Impulse I1′ bzw. I2′ sind jeweils zum korrespondierenden Impuls I1 bzw. I2 30° el. phasenverschoben. In den Diagrammen der Figuren 2 bis 7 sind die duplizierten Impulse I1′ und I2′ jeweils mittels einer unterbrochenen Linie dargestellt. Die Steuersignale, die jeweils einen Erst- und Zweitimpuls I1 und I2 und einen duplizierten Erst- und Zweitimpuls I1′ und I2′ aufweisen, bilden das modifizierte, 6-phasige Steuersignalsystem ST6′, das an den Ausgängen eines bekannten Steuersatzes ansteht.

In Figur 8 ist ein Umschaltsignal Q̅₁₂ in einem Diagramm über dem Phasenwinkel φ dargestellt. Dieses Umschaltsignal Q̅₁₂ wird im Steuersatz unter Zuhilfenahme des Modulationssignals u_{T2} und eines Zählers oder mittels eines vorhandenen Steuersatzrechners bestimmt. Der Wechsel vom low-Zustand zum high-Zustand findet immer dann statt, wenn der Erstimuls I1 der Steuersignale des 6-phasigen, modifizierten Steuersignalsystems ST6′ beendet ist. Der Wechsel vom high-Zustand zum low-Zustand beim Umschaltsignal Q̅₁₂ findet immer dann statt, wenn der duplizierte Erstimpuls I1′ der Steuersignale des 6-phasigen, modifizierten Steuersignalsystems ST6′ beendet ist. Man kann auch die Zweitimpulse I2 und die duplizierten Zweitimpulse I2′ zur Ermittlung des Umschaltsignals Q̅₁₂ verwenden. Auf alle Fälle muß sich beim Umschaltsignal Q̅₁₂ der Zustand von "low" nach "high" zwischen dem Ende des Erstimpulse I1 und dem Beginn des modifizierten Erstimpulses I1′ der Steuersignale wechseln. Der Zustand dieses Umschaltsignals Q̅₁₂ wechselt von "high" nach "low" zwischen dem Ende des modifizierten Erstimpulses I1′ und dem Beginn des Zweitimpulses I2 dieser Steuersignale.

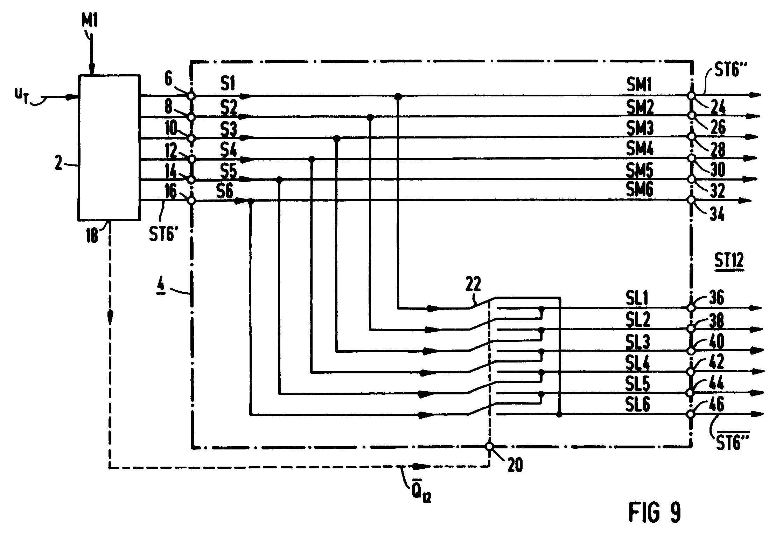

In der Figur 9 ist eine Schaltungsanordnung zur Durchführung des erfindungsgemäßen Verfahrens für eine Momentenrichtung M1 näher dargestellt. Diese Schaltungsanordnung besteht aus einem bekannten Steuersatz 2 und einer Schnittstellen-Einrichtung 4, auch Interface-Baugruppe genannt. Die Ausgänge des Steuersatzes 2 sind mit korrespondierenden Eingängen 6 bis 16 der Schnittstellen-Einrichtung 4 verbunden. Durch Halbierung der Amplitude U_{T1} des Modulationssignals u_{T1} generiert der bekannte Steuersatz 2 die in den Figuren 2 bis 7 dargestellten Steuersignale S1,...,S6. Diese Steuersignale S1,...,S6 bilden ein 6-phasiges, modifiziertes Steuersignalsystem ST6′, das der Interface-Baugruppe 4 zugeführt wird. Durch den mit u_{T} bezeichneten Pfeil soll angedeutet werden, daß die Amplitude U_{T1} abgeändert werden kann. Außerdem werden dem Steuersatz 2 zwei Momentensignale M1 und M2 zugeführt. Ein Umschaltausgang 18 des Steuersatzes 2 ist mit einem Steuereingang 20 der Schnittstellen-Einrichtung 4 verknüpft. Dieser Steuereingang 20 ist wiederum mit einem Betätigungseingang eines mehrpoligen Umschalters 22 elektrisch leitend verbunden.

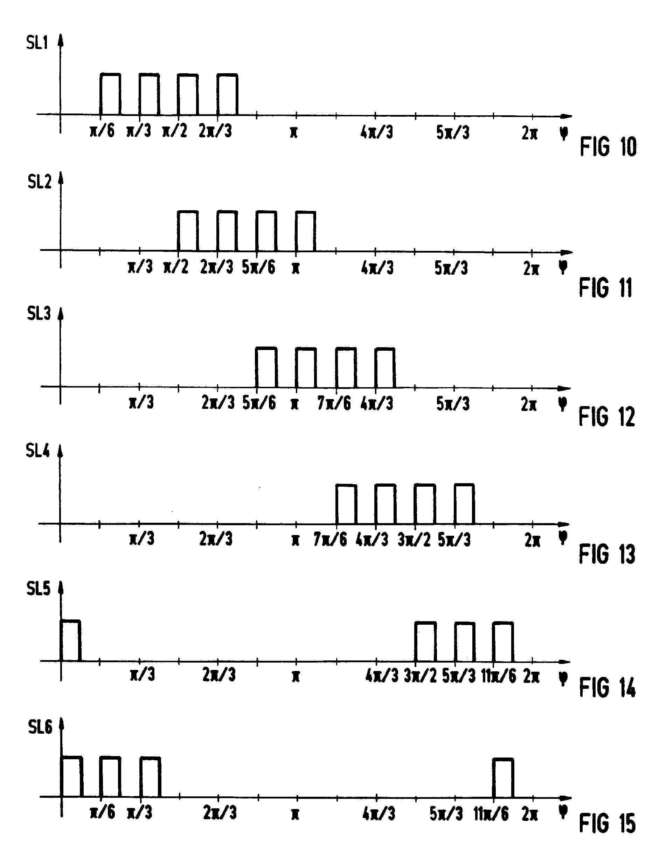

Die Eingänge 6 bis 16 der Interface-Baugruppe 4 sind einerseits direkt mit korrespondierenden Ausgängen 24 bis 34 und andererseits über den mehrpoligen Umschalter 22 mit korrespondierenden Ausgängen 36 bis 46 verknüpft. Die Steuersignale S1,...,S6 erscheinen an den Ausgängen 24 bis 34 als Steuersignale SM1,...,SM6 und bilden ein erstes Untersystem ST6˝ des 12-phasigen Steuersignalsstems ST12. Die Steuersignale SM1,...,SM6, auch Master-Steuersignale genannt, sind identisch mit den Steuersignalen S1,...,S6, weshalb in den Figuren 2 bis 7 die Steuersignale S1,...,S6 und SM1,...,SM6 in den Diagrammen über dem Phasenwinkel φ gemeinsam dargestellt sind. An den Ausgängen 36 bis 46 stehen Steuersignale SL1,...,SL6, auch Slave-Steuersignale genannt, an, die gegenüber den Steuersignalen SM1,...,SM6 um 30° el. nacheilend sind. Die Steuersignale SL1,...,SL6 sind in den Figuren 10 bis 15 jeweils in einem Diagramm über dem Phasenwinkel φ dargestellt. Diese Slave-Steuersignale SL1,...,SL6 bilden ein zweites 6-phasiges Untersystem S̅T̅6̅˝ des 12-phasigen Steuersignalsystems ST12.

Damit an den Ausgängen 36 bis 46 die Steuersignale SL1,...,SL6, die 30° el. den Master-Signalen SM1,...,SM6 nacheilen, anstehen, sind die Eingänge 6 bis 16 der Interface-Baugruppe 4 mit den Eingängen des Umschalters 22 elektrisch leitend verbunden. Jedem Eingang des mehrpoligen Umschalters 22 sind zwei Ausgänge zugeordnet. Der erste Ausgang des ersten Eingangs des Umschalters 22, der mit dem Eingang 6 der Schnittstellen-Einrichtung 4 verbunden ist, ist mit dem Ausgang 46 des zweiten Untersystems S̅T̅6̅˝ verknüpft, an dem das Steuersignal SL6 abgegriffen werden kann. Der zweite Ausgang des ersten Eingangs ist mit dem Ausgang 36 des zweiten Untersystems S̅T̅6̅˝ verknüpft. Der erste Ausgang des zweiten Eingangs des Umschalters 22 ist mit dem Ausgang 36 und ein zweiter Ausgang ist mit dem Ausgang 38 des zweiten Untersystems S̅T̅6˝ verbunden. In dieser Art und Weise sind auch die restlichen Ausgänge des Umschalters 22 mit den Ausgängen 38 bis 46 des zweiten Untersystems S̅T̅6̅˝ verbunden, wobei eine Überlappung stattfindet.

Mittels des Umschaltsignals Q̅₁₂ wird der Umschalter 22 betätigt. Ist der Zustand des Umschaltsignals Q̅₁₂ "low", so befinden sich die Schalter des Umschalters in der gezeigten Stellung, d.h., der Eingang 6 der Schnittstellen-Einrichtung 4 ist beispielsweise über den Umschalter 22 mit dem Ausgang 46 und der Eingang 16 ist mit dem Ausgang 44 der Schnittstellen-Einrichtung 4 verbunden.

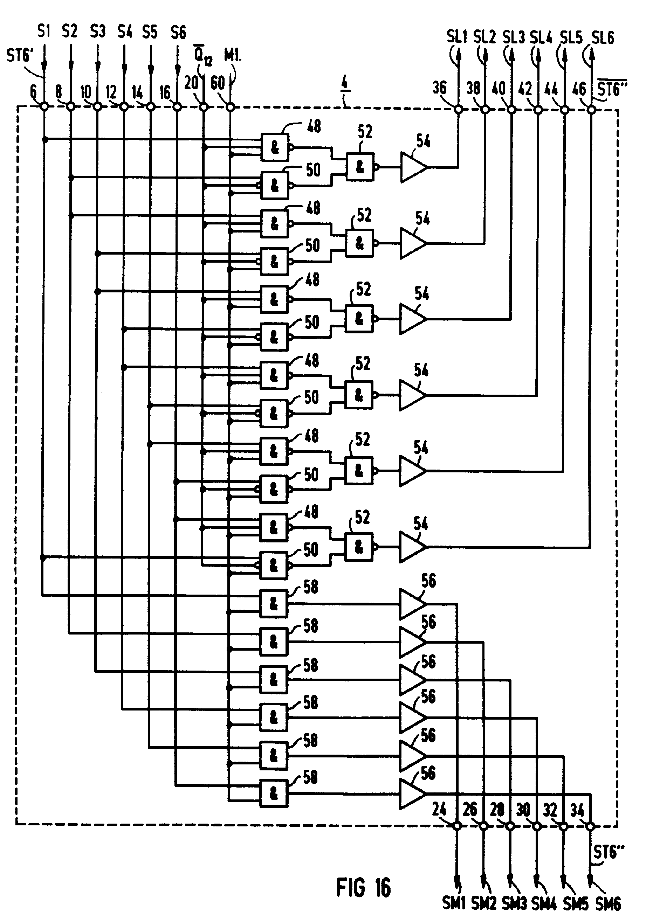

Eine hardwaremäßige Realisierung der Schnittstellen-Einrichtung 4 ist in Figur 16 näher dargestellt. Da für jedes Momentensignal M1 und M2 eine Interface-Baugruppe 4 vorgesehen ist, zeigt die Figur 16 die Ausführungsform für eine erste Momentenrichtung, ausgedrückt durch das Momentensignal M1. Die Ausführungsform der Interface-Baugruppe 4 für die zweite Momentenrichtung ist identisch.

Diese Schnittstellen-Einrichtung 4 besteht aus achtzehn NAND-Gattern 48, 50 und 52, zwölf nichtinvertierenden Treibern 54 und 56 und sechs UND-Gattern 58. Die mit 50 gekennzeichneten NAND-Gatter weisen einen invertierenden Eingang auf. Diese invertierenden Eingänge sind mit dem Steuereingang 20 der Interface-Baugruppe 4 elektrisch leitend verbunden. Da diese Interface-Baugruppe 4 für eine von zwei Momentenrichtungen bestimmt ist, weisen die mit 48 und 50 gekennzeichneten NAND-Gatter jeweils drei Eingänge auf. Soll die Interface-Baugruppe 4 nur für eine Momentenrichtung ausgeführt werden, genügen NAND-Gatter 48 und 50 mit zwei Eingängen. Ebenfalls kann man dann auf die UND-Gatter 58 verzichten. Wird eine negative Logik gebraucht, d.h. im Low-Zustand wird ein Stromrichterventil angesteuert, so können der Interface-Baugruppe 4 Inverter nachgeschaltet werden oder anstelle der nichtinvertierenden Treiber 54, 56 invertierende Treiber verwendet werden. Von den drei Eingängen der NAND-Gatter 48 und 50 sind jeweils ein Eingang mit einem der Eingänge 6,...,16 der Interface-Baugruppe 4, ein Eingang mit dem Steuereingang 20 der Interface-Baugruppe 4 und ein Eingang mit einem Momenteneingang 60 der Interface-Baugruppe 4 elektrisch leitend verbunden. Von den beiden Eingängen der UND-Gatter 58 ist ein Eingang mit einem der Eingänge 6,...,16 der Interface-Baugruppe 4 und ein anderer Eingang mit seinem Momenteneingang 60 verbunden. Jeweils ein NAND-Gatter 48 und ein NAND-Gatter 50 sind ausgangsseitig über ein NAND-Gatter 52 miteinander verbunden. Diesem NAND-Gatter 52 ist jeweils ein Treiber 54 nachgeschaltet, der ausgangsseitig mit einem der Ausgänge 36,...,46 der Interface-Baugruppe 4 verbunden ist. Den UND-Gattern 58 ist auch jeweils ein Treiber 56 nachgeschaltet, die ausgangsseitig mit einem der Ausgänge 24,...,34 verbunden sind. Mittels des Umschaltsignals Q̅₁₂ und dem Momentensignal M1 können mehrere der Ausgänge 36,...,46 oder alle Ausgänge 24,..., 46 der Interface-Baugruppe 4 verriegelt werden.

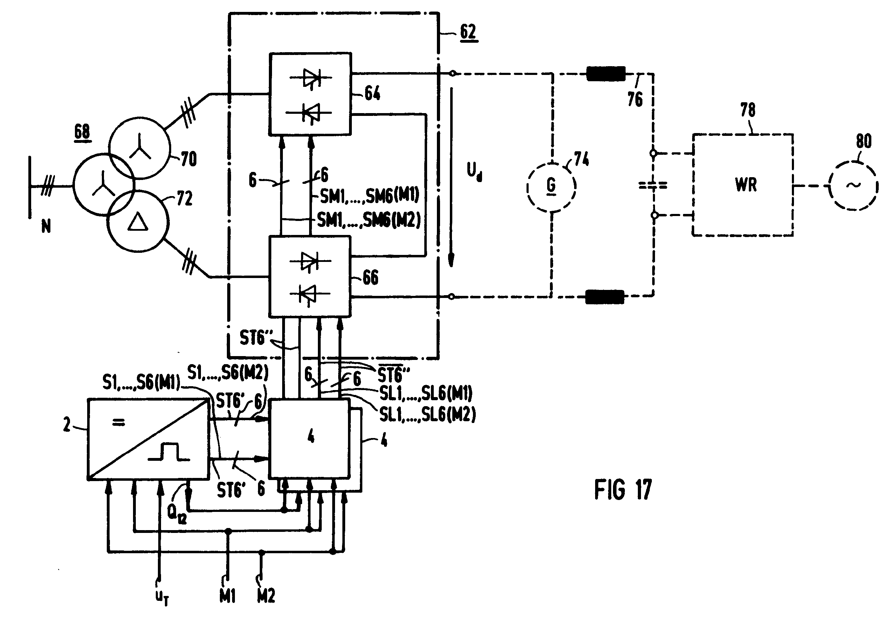

In Figur 17 ist eine Verwendung des bekannten Steuersatzes 2 mit der Schnittstellen-Einrichtung 4 dargestellt. Es zeigt einen 12-pulsigen, netzgeführten Umkehrstromrichter 62, der aus zwei elektrisch in Reihe geschalteter 6-pulsiger, netzgeführter Umkehrstromrichter 64 und 66 besteht. Dabei ist der mit 64 bezeichnete Umkehrstromrichter der Master-Umrichter und der mit 66 bezeichnete Umkehrstromrichter der Slave-Umrichter. Der 12-pulsige, netzgeführte Umkehrstromrichter 62 weist am Eingang einen Stromrichtertransformator 68 mit zwei getrennten Sekundärwicklungen 70 und 72 auf. Der Stromrichtertransformator 68 ist primärseitig mit einem Netz N verbunden. Durch die Schaltung des Stromrichtertransformators 68 erscheint an den Eingangsklemmen der Umkehrstromrichter 64 und 66 jeweils das Spannungssystem des speisenden Netzes N, wobei diese Spannungssysteme um 30° el. phasenverschoben zueinander sind. Am Ausgang des 12-pulsigen, netzgeführten Umkehrstromrichters 62 kann eine Gleichstrommaschine 74 oder aber ein Zwischenkreis 76 (Stromzwischenkreis oder Spannungszwischenkreis) mit einem nachgeschalteten Wechselrichter 78, der einen Drehstrommotor 80 speist, angeschlossen sein. Um die beiden Anwendungen in einer Figur zu verdeutlichen, sind die Gleichstrommaschine 74, der Zwischenkreis 76, der Wechselrichter 78 und der Drehfeldmaschine 80 mittels unterbrochener Linien dargestellt.

Die 2x6-Ausgänge des modifizierten Steuersatzes 2, der das 6-phasige, modifizierte Steuersignalsystem ST6′ mit den Steuersignalen S1,...,S6 generiert, sind mit den Eingängen 6,...,16 der ersten und zweiten Interface-Baugruppe 4 verknüpft. Die Ausgänge 24,...,34 der ersten und zweiten Interface-Baugruppe 4 sind mit dem Master-Umrichter 64 verbunden, an denen das erste 6-phasige Untersystem ST6˝ des 12-phasigen Steuersignalsystems ST12 mit den Master-Steuersignalen SM1,...,SM6 für beide Momentenrichtungen anstehen.

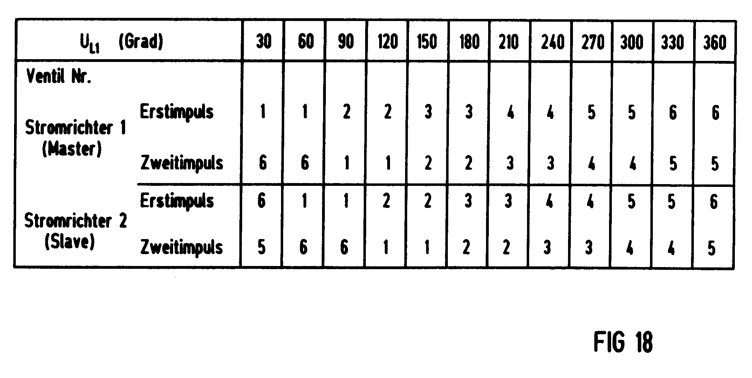

Die Ausgänge 36,...,46 der beiden Interface-Baugruppen 4 sind mit dem Slave-Umrichter 66 verknüpft. An diesen Ausgängen 36,...,46 steht jeweils das zweite Untersystem S̅T̅6̅˝ des 12-phasigen Steuersignalsystems ST12 mit den Slave-Steuersignalen SL1,...,SL6 an. Dem Steuersatz 2 und den beiden Interface-Baugruppen 4 sind die beiden Momentensignale M1 und M2 zugeführt. Das Modulationssignal u_{T} ist außerdem dem Steuersatz 2 zugeführt. Die Zuführung dieses Modulationssignals u_{T} soll nur andeuten, daß die Amplitude U_{T} des Modulationssignals u_{T} des Steuersatzes 2 einstellbar ist. Mittels des Umschaltsignals Q̅₁₂ des Steuersatzes 2 werden die Steuersignale S1,...,S6 des modifizierten 6-phasigen Steuersignalsystems ST6′, die jeweils zwei Erst- und zwei Zweitimpulse I1, I1′ und I2, I2′ aufweisen, den Ausgängen 24,...,34 und 36,...,46 zugeordnet. Das dadurch entstehende beispielhafte Impulsmuster (stationärer Betrieb und Vollaussteuerung) ist der Tabelle der Figur 18 zu entnehmen.

Durch das erfindungsgemäße Verfahren und der Schaltungsanordnung zur Durchführung des Verfahrens kann ein zweiter Steuersatz eingespart werden, wodurch sich der Hardware-Aufwand erheblich verringert. Außerdem wird durch dieses Verfahren eine 12-Puls-Dynamik erreicht.

## Patentansprüche

1. Verfahren zur Erzeugung eines 12-phasigen Steuersignalsystems (ST12) aus einem 6-phasigen Steuersignalsystem (ST6), dessen 60° el. phasenverschobenen Steuersignale (S1,...,S6) jeweils mittels eines Modulationssignals (u_{T}) einen Erstimpuls (I1) und einen um 60° el. phasenverschobenen Zweitimpuls (I2) aufweisen, mit folgenden Verfahrensschritten:
a) Abänderung des Modulationssignals (u_{T}) derart, daß die Erst- und Zweitimpulse (I1,I2) jedes Steuersignals (S1,...,S6) des 6-phasigen Steuersignalsystems (ST6) dupliziert werden, wobei die duplizierten Impulse (I1′,I2′) jeweils zum korrespondierenden Impuls (I1 bzw. I2) 30° el. phasenverschoben sind,
b) Generierung eines Umschaltsignals (Q̅₁₂), das frühestens mit Beendigung eines Erstimpulses (I1) seinen Zustand von "low" nach "high" und frühestens mit Beendigung eines duplizierten Erstimpulses (I1′) seinen Zustand von "high" nach "low" ändert,
c) direkte Verknüpfung des 6-phasigen modifizierten Steuersignalsystems (ST′6) mit jeweils einem 6-phasigen Untersystem (ST6˝, S̅T̅6̅˝) des 12-phasigen Steuersignalsystems (ST12), wenn das Umschaltsignal (Q̅₁₂) sich im high-Zustand befindet und
d) direkte Verknüpfung des 6-phasigen modifizierten Steuersignalsystems (ST6′) mit dem ersten 6-phasigen Untersystem (ST6˝) des 12-phasigen Steuersignalsystems (ST12) und eine um eine Phase verschobene Verknüpfung des 6-phasigen modifizierten Steuersignalsystems (ST6′) mit dem zweiten 6-phasigen Untersystem (S̅T̅6̅˝) des 12-phasigen Steuersignalsystems (ST12), wobei das zweite Untersystem (S̅T̅6̅˝) dem ersten Untersystem (ST6˝) um eine Phase nacheilt, wenn das Umschaltsignal (Q̅₁₂) sich im low-Zustand befindet.

2. Verfahren nach Anspruch 1, wobei die Amplitude (U_{T}) des Modulationssignals (u_{T}) halbiert wird.

3. Schaltungsanordnung zur Durchführung des Verfahrens nach Anspruch 1, bestehend aus einem modifizierten Steuersatz (2) und einer Schnittstellen-Einrichtung (4), wobei der modifizierte Steuersatz (2) eine Einrichtung zur Halbierung eines anstehenden Modulationssignals (u_{T}) und zur Generierung eines Umschaltsignals (Q̅₁₂) in Abhängigkeit dieses erstellten Modulationssignals (U_{T2}) und einen bekannten Steuersatz aufweist, der ein 6-phasiges Steuersignalsystem (ST6) generiert, dessen 60°-phasenverschobene Steuersignale (S1,...,S6) jeweils einen Erstimpuls (I1) und einen um 60°-phasenverschobenen Zweitimpuls (I2) aufweisen, wobei die Schnittstellen-Einrichtung (4) sechs Eingänge (6-16), zwölf Ausgänge (24-46) und einen Umschalter (22) aufweist, wobei die sechs Eingänge (6-16) einerseits direkt mit seinen ersten sechs Ausgängen (24-34) und andererseits über den Umschalter (22) mit seinen zweiten sechs Ausgängen (36-46) verknüpft sind und wobei die sechs Ausgänge des modifizierten Steuersatzes (2), an denen ein modifziertes 6-phasiges Steuersignalsystem (ST6′) ansteht, dessen Steuersignale (S1,...,S6) jeweils zu dem Erst- und Zweitimpuls (I1,I2) jeweils einen duplizierten Erst- und Zweitimpuls (I1′,I2′) aufweisen, mit den sechs Eingängen (6-16) der Schnittstellen-Einrichtung (4) und dessen Umschalterausgang (18), an dem das Umschaltsignal (Q̅₁₂) ansteht, mittels einem Steuereingang (20) der Schnittstellen-Einrichtung (4) mit einem Betätigungseingang seines Umschalters (22) elektrisch leitend verbunden sind.

4. Schaltungsanordnung nach Anspruch 3, wobei als Schnittstellen-Einrichtung (4) ein Logiknetzwerk, bestehend aus achtzehn NAND-Gattern (48,50,52) und zwölf Treibern (54,56), vorgesehen ist, daß von diesen achtzehn NAND-Gattern (48,50,52) sechs NAND-Gatter (50) einen invertierenden Eingang aufweisen, deren Ausgänge jeweils mit einem Ausgang von weiteren sechs NAND-Gattern (48) mittels eines NAND-Gatters (52) verknüpft sind, deren Ausgänge jeweils über einen Treiber (54) mit einem der zweiten sechs Ausgänge (36-46) der Schnittstellen-Einrichtung (4) verbunden sind, wobei diese zwölf NAND-Gatter (48,50) eingangsseitig einerseits mit einem Eingang (6-16) der Schnittstellen-Einrichtung (4) und andererseits mit dem Steuereingang (20) der Schnittstellen-Einrichtung (4) verbunden sind und wobei die Eingänge der Schnittstellen-Einrichtung (4) jeweils über einen Treiber (56) mit einem der ersten sechs Ausgänge (24-34) der Schnittstellen-Einrichtung (4) verbunden sind.

5. Schaltungsanordnung nach Anspruch 4, mit einem Momentensignal (M1,M2), wobei die NAND-Gatter (48,50), von denen jeweils zwei mittels eines nachgeschalteten NAND-Gatters (52) miteinander verknüpft sind, drei Eingänge aufweisen, von denen ein erster Eingang mit einem der Eingänge (6-16) der Schnittstellen-Einrichtung (4), ein zweiter Eingang mit dem Steuereingang (20) der Schnittstellen-Einrichtung (4) und der dritte Eingang mit einem Momenteneingang (60) der Schnittstellen-Einrichtung (4) verbunden sind, und wobei die Eingänge (6,...,16) der Schnittstellen-Einrichtung (4) jeweils über ein UND-Gatter (58) mit nachgeschaltetem Treiber (56) mit den Ausgängen (24,...34) der Schnittstellen-Einrichtung (4) verbunden sind, wobei der zweite Eingang der UND-Gatter (58) jeweils mit dem Momenteneingang (60) der Schnittstellen-Einrichtung (4) verknüpft ist.

6. Verwendung des Verfahrens nach Anspruch 1 und der Schaltungsanordnung nach Anspruch 3 zur Steuerung eines netzgeführten 12-pulsigen Stromrichters, bestehend aus einer Serienschaltung zweier 6-pulsiger netzgeführter Stromrichter, die eingangsseitig über einen Stromrichtertransformator (68) mit zwei getrennten Sekundärwicklungen (70,72) aus einem Netz (N) gespeist werden.

7. Verwendung des Verfahrens nach Anspruch 1 und der Schaltungsanordnung nach Anspruch 3 zur Steuerung eines netzgeführten 12-pulsigen Stromrichters, bestehend aus einer Parallelschaltung zweier 6-pulsiger netzgeführter Stromrichter, die eingangsseitig über einen Stromrichtertransformator mit zwei getrennten Sekundärwicklungen aus einem Netz gespeist werden.

8. Verwendung des Verfahrens nach Anspruch 1, mit einer Schaltungsanordnung nach den Ansprüchen 4 und 5, wobei zwei netzgeführte, 6-pulsige Umkehrstromrichter (64,66) zu einem netzgeführten, 12-pulsigen Umkehrstromrichter (62) elektrisch in Reihe geschaltet sind.

9. Verwendung nach Anspruch 6 oder 8, wobei der Ausgang des netzgeführten, 12-pulsigen Stromrichters mit einem Gleichstrommotor (74) versehen ist.

10. Verwendung nach Anspruch 6 oder 8, wobei der Ausgang des netzgeführten, 12-pulsigen Stromrichters über einen Zwischenkreis (76) mit einem nachgeschalteten Wechselrichter (78) mit einer Drehfeldmaschine (80) versehen ist.

## Claims

1. Method of generating a 12-phase control-signal system (ST12) from a 6-phase control-signal system (ST6) whose 60° electrically out-of-phase control signals (S1, ..., S6) each comprise, by means of a modulation signal (u_{T}), a first pulse (I1) and a 60° electrically out-of-phase second pulse (I2), comprising the following method steps:
a) modification of the modulation signal (u_{T}) in such a way that the first and second pulses (I1, I2) of each control signal (S1, ..., S6) of the 6-phase control-signal system (ST6) are duplicated, the duplicated pulses (I1′, I2′) being 30° electrically out-of-phase with the corresponding pulse (I1 or I2, respectively), in each case,
b) generation of a switching signal (Q̅₁₂) which changes its state from "low" to "high" at the earliest with the termination of a first pulse (I1) and which changes its state from "high" to "low" at the earliest with the termination of a duplicated first pulse (I1′),
c) direct linking of the 6-phase modified control-signal system (ST6′) in each case to a 6-phase subsystem (ST6˝, S̅T̅6̅˝) of the 12-phase control-signal system (ST12) if the switching signal (Q̅₁₂) is in the high state and
d) direct linking of the 6-phase modified control-signal system (ST6′) to the first 6-phase subsystem (ST6˝) of the 12-phase control-signal system (ST12) and a linking, shifted by one phase, of the 6-phase modified control-signal system (ST6′) to the second 6-phase subsystem (S̅T̅6̅˝) of the 12-phase control-signal system (ST12), the second subsystem (S̅T̅6̅˝) lagging the first subsystem (ST6˝) by one phase if the switching signal (Q₁₂) is in the low state.

2. Method according to Claim 1, wherein the amplitude (U_{T}) of the modulation signal (u_{T}) is halved.

3. Circuit arrangement for performing the method according to Claim 1, comprising a modified drive unit (2) and an interface device (4) wherein the modified drive unit (2) comprises a device for halving an available modulation signal (u_{T}) and generating a switching signal (Q̅₁₂) as a function of said modulation signal (U_{T2}), and a known drive unit which generates a 6-phase control-signal system (ST6) whose 60° out-of-phase control signals (S1, ..., S6) each comprise a first pulse (I1) and a 60° out-of-phase second pulse (I2), wherein the interface device (4) has six inputs (6-16), twelve outputs (24-46) and a selector switch (22), wherein the six inputs (6-16) are linked, on the one hand, directly to its first six outputs (24-34) and, on the other hand, via the selector switch (22) to its second six outputs (36-46), and wherein the six outputs of the modified drive unit (2), at which a modified 6-phase control-signal system (ST6′) is available whose control signals (S1, ..., S6) each comprise in addition to the first and second pulse (I1, I2) a duplicated first and second pulse (I1′, I2′) in each case, are connected in an electrically conducting manner to the six inputs (6-16) of the interface device (4) and whose selector-switch output (18), at which the switching signal (Q̅₁₂) is available, is connected in an electrically conducting manner to an actuation input of its selector switch (22) by means of a control input (20) of the interface device (4).

4. Circuit arrangement according to Claim 3, characterized in that a logic network comprising eighteen NAND gates (48, 50, 52) and twelve drivers (54, 56) is provided as interface device (4), in that, of said eighteen NAND gates (48, 50, 52), six NAND gates (50) have an inverting input, their outputs being linked in each case to an output of a further six NAND gates (48) by means of an NAND gate (52) whose outputs are each connected via a driver (54) to one of the second six outputs (36-46) of the interface device (4), in that said twelve NAND gates (48, 50) are connected on the input side, on the one hand, to an input (6-16) of the interface device (4) and, on the other hand, to the control input (20) of the interface device (4), and in that the inputs of the interface device (4) are each connected via a driver (56) to one of the first six outputs (24-34) of the interface device (4).

5. Circuit arrangement according to Claim 4, having a torque signal (M1, M2), characterized in that the NAND gates (48, 50), of which two are linked together in each case by means of a downstream NAND gate (52), have three inputs, of which a first input is connected to one of the inputs (6-16) of the interface device (4), a second input to the control input (20) of the interface device (4) and the third input to a torque input (60) of the interface device (4), and in that the inputs (6, ..., 16) of the interface device (4) are each connected via an AND gate (58) with downstream driver (56) to the outputs (24, ..., 34) of the interface device (4), the second input of the AND gates (58) being linked in each case to the torque input (60) of the interface device (4).

6. Use of the method according to Claim 1 and of the circuit arrangement according to Claim 3 to control a line-commutated 12-pulse current converter comprising a series circuit of two 6-pulse line-commutated current converters which are fed on the input side from a mains (N) by a current-converter transformer (68) having two separate secondary windings (70, 72).

7. Use of the method according to Claim 1 and of the circuit arrangement according to Claim 3 to control a line-commutated 12-pulse current converter comprising a parallel connection of two 6-pulse line-commutated current converters which are fed on the input side from a mains via a current-converter transformer having two separate secondary windings.

8. Use of the method according to Claim 1 with a circuit arrangement according to Claims 4 and 5, characterized in that two line-commutated 6-pulse reversible current converters (64, 66) are connected electrically in series to form a line-commutated 12-pulse reversible current converter (62).

9. Use according to Claim 6 or 8, characterized in that the output of the line-commutated 12-pulse current converter is provided with a direct-current motor (74).

10. Use according to Claim 6 or 8, characterized in that the output of the line-commutated 12-pulse current converter is provided with a polyphase machine (80) via an intermediate circuit (76) comprising a downstream inverter (78).

## Revendications

1. Procédé pour produire un système de signaux de commande dodécaphasé (ST12), constitué par un système de signaux de commande hexaphasé (ST6), dont les signaux de commande (S1...S6), qui sont déphasés de 60° électriques, possèdent, respectivement, au moyen d'un signal de modulation (u_{T}), une première impulsion (I1) et une seconde impulsion (I2) déphasée de 60° électriques, présentant les étapes opératoires suivants:
a) modification du signal de modulation (u_{T}) de telle sorte que la première impulsion et la seconde impulsion (I1,I2) de chaque signal de commande (S1...S6) du système de signaux de commande hexaphasé (ST6) sont doublées, les impulsions doublées (I1′,I2′) étant déphasées de 30° électriques, respectivement par rapport à l'impulsion correspondante (I1 ou I2),
b) production d'un signal de commutation (Q̅₁₂), dont l'état passe du niveau "bas" au niveau "haut" au plus tard à la fin de la première impulsion (I1) et dont l'état passe du niveau "haut" au niveau "bas" au plus tard à la fin de la première impulsion doublée (I1′),
c) combinaison directe du système de signaux de commande modifié hexaphasé (ST′6) respectivement à un sous-systèmes hexaphasé (ST6˝, S̅T̅6̅˝) du système de signaux de commande dodécaphasé (ST12) lorsque le signal de commutation (Q̅₁₂) est situé au niveau haut, et
d) combinaison directe du système de signaux de commande modifié hexaphasé (ST6′) au premier sous-système hexaphasé (ST6˝) du système de signaux de commande dodécaphasé (ST12), et combinaison, décalée d'une phase, du système de signaux de commande modifié hexaphasé (ST6′) au second sous-système hexaphasé (S̅T̅6̅˝) du système de signaux de commande dodécaphasé (ST12), le second sous-système (S̅T̅6̅˝) étant en retard d'une phase par rapport au premier sous-système (ST6˝) lorsque le signal de commutation (Q̅₁₂) est situé au niveau bas.

2. Procédé suivant la revendication 1, dans lequel l'amplitude (U_{T}) du signal de modulation (u_{T}) est divisée par deux.

3. Montage pour la mise en oeuvre du procédé suivant la revendication 1, constitué par une unité de commande modifiée (2) et un dispositif d'interface (4), et dans lequel l'unité de commande modifiée (2) comporte un dispositif pour diviser par deux le signal de modulation présent (u_{T}) et produire un signal de commutation (Q̅₁₂) en fonction de ce signal de modulation établi (U₁₂), et une unité de commande connue, qui produit un système de signaux de commande hexaphasé (ST6), dont les signaux de commande (S1...S6) déphasés de 60° électriques comportent respectivement une première impulsion (I1) et une seconde impulsion (12) déphasée de 60°, et dans lequel le dispositif d'interface (4) comporte six entrées (6-16), douze sorties (24-26) et un commutateur (22), et dans lequel les six entrées (6-16) sont reliées directement aux six premières sorties (24-34) du dispositif d'interface et, d'autre part, par l'intermédiaire du commutateur (22), aux six secondes sorties (3646) du dispositif d'interface, et dans lequel les six sorties de l'unité de commande modifiée (2), au niveau desquelles est présent un système de signaux de commande hexaphasé modifié(ST6′), dont les signaux de commande (S1 ...S6) possèdent, respectivement, en association avec les première et seconde impulsions (I1,I2), respectivement des première et seconde impulsions doublées (I1′, I2′), sont reliées d'une manière électriquement conductrice aux six entrées (6-16) du dispositif d'interface (4) et la sortie de commutation (18) de cette unité de commande, sur laquelle apparaît le signal de commutation (Q̅₁₂), est reliée d'une manière électriquement conductrice, au moyen d'une entrée de commande (20) du dispositif d'interface (4), et une entrée d'actionnement du commutateur (22) de ce dispositif.

4. Montage suivant la revendication 3, dans lequel il est prévu comme dispositif d'interface (4) un réseau logique constitué par dix-huit portes NON-ET (48,50,52) et douze étages d'attaque (54,56), que parmi ces dix-huit portes NON-ET (48,50,52), six portes NON-ET (50) possèdent une entrée inverseuse, tandis que leurs sorties sont reliées respectivement à une sortie de six autres portes NON-ET (48) au moyen d'une porte NON-ET (52), dont les sorties sont reliées respectivement, par l'intermédiaire d'un étage d'attaque (54), à l'une des six secondes sorties (3646) du dispositif d'interface (4), et dans lequel ces douze portes NON-ET (48,50) sont reliées côté entrée, d'une part, à une entrée (6-16) du dispositif d'interface (4) et, d'autre part, à l'entrée de commande (20) du dispositif d'interface (4), et dans lequel les entrées du dispositif d'interface (4) sont reliées respectivement, par l'intermédiaire d'un étage d'attaque (56), à l'une des six premières sorties (24-34) du dispositif d'interface (4).

5. Montage suivant la revendication 4, utilisant un signal de moment (M1,M2), et dans lequel les portes NON-OU 48,50), dont deux sont respectivement reliées entre elles au moyen d'une porte NON-ET (52) branchée en aval, comportent trois entrées, dont la première est reliée à l'une des entrées (6-16) du dispositif d'interface (4), une seconde entrée est reliée à l'entrée de commande (20) du dispositif d'interface (4) et la troisième entrée est reliée à une entrée de moment (60) du dispositif d'interface (4), et dans lequel les entrées (6,...16) du dispositif d'interface (4) sont reliées respectivement par l'intermédiaire d'une porte ET (58), en aval de laquelle est branché un étage d'attaque (56), aux sorties (24,...34) du dispositif d'interface (4), la seconde entrée des portes ET (58) étant réunie respectivement à l'entrée de moment (60) du dispositif d'interface (4).

6. Utilisation du procédé suivant la revendication 1 et du montage suivant la revendication 3 pour la commande d'un convertisseur statique à 12 impulsions, piloté par le réseau et constitué par un montage en série de deux convertisseurs statiques à 6 impulsions, pilotés par le réseau et qui sont alimentés, côté entrée, et par l'intermédiaire d'un transformateur (68) comportant deux enroulements secondaires séparés (70,72), à partir d'un réseau (N).

7. Utilisation du procédé suivant la revendication 1 et du montage suivant la revendication 3 pour la commande d'un convertisseur statique à 12 impulsions, piloté par le réseau, constitué par un montage en parallèle de deux convertisseurs statiques à 6 impulsions, pilotés par le réseau, et qui sont reliés, côté entrée, par l'intermédiaire d'un transformateur à deux enroulements secondaires séparés, à partir d'un réseau.

8. Utilisation du procédé suivant la revendication 1, comportant un montage suivant les revendications 4 et 5, pour laquelle deux convertisseurs statiques inverseurs à 6 impulsions (64,66), pilotés par le réseau, sont raccordés électriquement en série pour former un convertisseur statique inverseur à 12 impulsions (62) pilotées par le réseau.

9. Utilisation du procédé suivant la revendication 6 ou 8, pour laquelle la sortie du convertisseur statique à 12 impulsions, pilotés par le réseau, est équipée d'un moteur à courant continu (74).

10. Utilisation du procédé suivant la revendication 6 ou 8, pour laquelle la sortie du convertisseur de sortie à 12 impulsions, pilotés par le réseau, est équipée d'une machine à champ tournant (80) moyennant l'interposition d'un circuit intermédiaire (67) en aval duquel est branché un onduleur (78).
